# EUROPEAN PATENT APPLICATION

(11) **EP 4 279 943 A1**
(43) Date of publication of application: **22.11.2023**
(21) Application number: 23170337.2
(22) Date of filing: 27.04.2023
(51) Int. Cl.: G01S 5/02, H04W 84/18

(54) **LOCATION TRACKING SYSTEM AND ASSOCIATED METHOD**

(30) Priority: 20.05.2022 US 202263344080 P; 26.04.2023 US 202318139363
(71) Applicant: MediaTek Inc., Hsin-Chu 300 (TW)
(72) Inventor: WEN, Yuan-Chin, 30078 Hsinchu City (TW); CHIU, Po-Jung, 30078 Hsinchu-City (TW); LIN, Ya-Chi, 30078 Hsinchu City (TW); LIAO, Yun-Cheng, 30078 Hsinchu City (TW); HUANG, Shun-Yong, 30078 Hsinchu City (TW)
(74) Representative: Hoefer & Partner Patentanwälte mbB

(57) **Abstract**

An embodiment of the invention provides a method for a location tracking, applied to a mobile device, an indoor access point, AP, and at least one indoor Internet of Things, IoT, device, comprising: receiving, by the indoor AP, a first set of location information of the mobile device from the mobile device at outdoor, wherein the first set of location information is determined according to a Global Navigation Satellite System, GNSS, (S202); determining, by the indoor AP, a second set of location information of the indoor AP according to the first set of location information (S204); determining, by the indoor AP, a third set of location information of the at least one indoor IoT device according to the second set of location information (S206); and transmitting, by the indoor AP, the third set of location information to the at least one indoor IoT device (S208).

## Description

### Cross Reference to Related Applications

This application claims the benefit of U.S. Provisional Application No. 63/344,080, filed on May 20th, 2022. The content of the application is incorporated herein by reference.

### Background

The global positioning system (GPS) and other like satellite and terrestrial positioning systems have enabled navigation services for devices in outdoor environments. Meanwhile, as satellite positioning is of limited use for indoor environments, locating devices in indoor environments encounter a lot of challenges.

As the implementation of Internet of Things (IoT) gets popular, the needs for indoor location service emerge. For example, a client (e.g. an application, a server, or a user) may need to know the location of each indoor device for various scenarios such as the products in the store or the navigation in the public buildings. Various techniques have developed for determining mobile device location indoors, e.g., using signals from access points (APs) and/or other devices using WiFi and/or short-range wireless protocols such as BLUETOOTH^{®}. However, one major drawback of the present technology is that the client needs to manually sets and updates the location information of the indoor devices via WLAN or Internet. Therefore, how to provide the location information of the indoor devices automatically is an important problem to be solved.

### Summary

It is an objective of the invention to provide a communication apparatus, in order to solve the above problem. A method and a system according to the invention are defined in the independent claims. The dependent claims define preferred embodiments thereof.

An embodiment of the invention provides a method for a location tracking, applied to a mobile device, an indoor access point (AP) and at least one indoor Internet of Things (IoT) device, comprising: receiving, by the indoor AP, a first set of location information of the mobile device from the mobile device at outdoor, wherein the first set of location information is determined according to a Global Navigation Satellite System (GNSS); determining, by the indoor AP, a second set of location information of the indoor AP according to the first set of location information; determining, by the indoor AP, a third set of location information of the at least one indoor IoT device according to the second set of location information; and transmitting, by the indoor AP, the third set of location information to the at least one indoor IoT device; wherein the first set of location information, the second set of location information and the third set of location information are related to GNSS coordinates, angle of arrival (AoA) information and ranging information.

An embodiment of the invention provides a method for a location tracking, applied to a location tracking system (LTS) comprising a mobile device, an indoor access point (AP) and at least one indoor Internet of Things (IoT) device, comprising: obtaining, by the mobile device, a first set of location information of the mobile device according to a Global Navigation Satellite System (GNSS); determining, by the mobile device, a second set of location information of the indoor AP according to the first set of location information; transmitting, by the mobile device, the second set of location information to the indoor AP; determining, by the indoor AP, a third set of location information of the at least one indoor IoT device according to the second set of location information; and receiving, by the at least one indoor IoT device, the third set of location information from the indoor AP.

These and other objectives of the present invention will no doubt become obvious to those of ordinary skill in the art after reading the following detailed description of the preferred embodiment that is illustrated in the various figures and drawings.

### Brief Description of the Drawings

FIG. 1 is an exemplary block diagram of a location tracking system according to an embodiment of the invention.
FIG. 2 is a flowchart of a process according to an embodiment of the invention.
FIG. 3 is a flowchart of a process according to an embodiment of the invention.
FIG. 4 is a schematic diagram of a scenario according to an example of the present invention.
FIG. 5 is a schematic diagram of a frame according to an example of the present invention.
FIG. 6 is a schematic diagram of a frame according to an example of the present invention.
FIG. 7 is a schematic diagram of a request frame according to an example of the present invention.
FIG. 8 is a schematic diagram of a request frame according to an example of the present invention.

### Detailed Description

Certain terms are used throughout the following description and claims, which refer to particular components. As one skilled in the art will appreciate, electronic equipment manufacturers may refer to a component by different names. This document does not intend to distinguish between components that differ in name but not in function. In the following description and in the claims, the terms "include" and "comprise" are used in an open-ended fashion, and thus should be interpreted to mean "include, but not limited to ... ". Also, the term "couple" is intended to mean either an indirect or direct electrical connection. Accordingly, if one device is coupled to another device, that connection may be through a direct electrical connection, or through an indirect electrical connection via other devices and connections. In addition, the operation "determine" may be replaced by the operation "compute", "calculate", "obtain", "generate", "output, "use", "choose/select", "decide" or "is configured to".

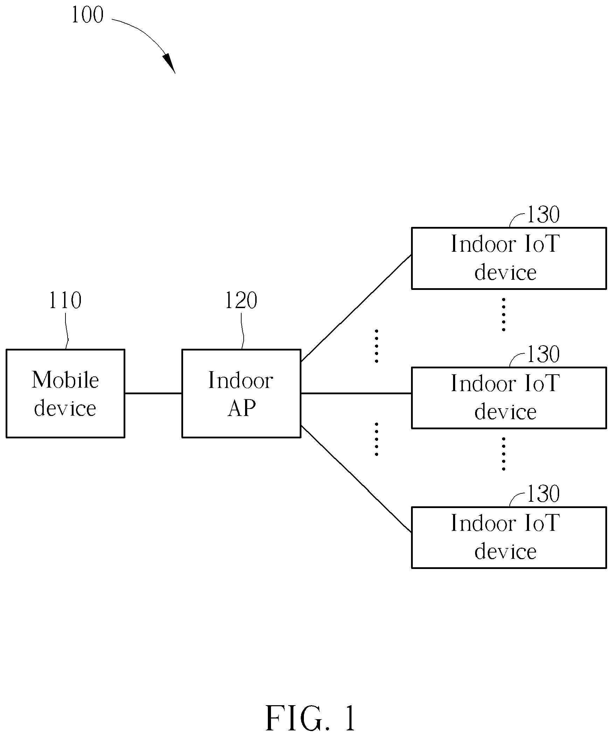

FIG. 1 is an exemplary block diagram of a location tracking system 100 according to an embodiment of the invention. The location tracking system 100 comprises a mobile device 110, an indoor access point (AP) 120, and a plurality of indoor Internet of Things (IoT) devices 130. The mobile device 110 may be a user equipment (UE), a low cost device (e.g., machine type communication (MTC) device), a device-to-device (D2D) communication device, a mobile phone, a laptop, a tablet computer, an electronic book, a portable computer system, or a combination thereof. The indoor AP 120 (e.g., a wireless AP) is a network device that allows the mobile device 110 and the indoor IoT devices 130 to connect to a wireless local area network (WLAN) . The indoor AP 120 may have a connection to a router (not shown), or may be an integral component of the router. The indoor IoT devices 130 may be electronic devices supporting the wireless network, which are applied to realize an indoor automation (e.g., lighting, heating and air conditioning, a media and security system and a camera system in home, office and/or mall) . For example, an indoor IoT device 130 may be a printer, a television, a washing machine, a refrigerator, an air conditioner, a light, but is not limited herein.

In the location tracking system 100, the mobile device 110 and the indoor AP 120 can be seen as an initiator station (ISTA) or a responder station (RSTA) according to direction (i.e., transmission direction). The mobile device 110 is the ISTA and the indoor AP 120 is the RSTA. Or, the mobile device 110 is the RSTA and the indoor AP 120 is the ISTA. In addition, the indoor AP 120 and an indoor IoT device 130 can be seen as an ISTA or an RSTA according to direction (i.e., transmission direction). The indoor AP 120 is the ISTA and the indoor IoT device 130 is the RSTA. Or, the indoor AP 120 is the RSTA and the indoor IoT device 130 is the ISTA.

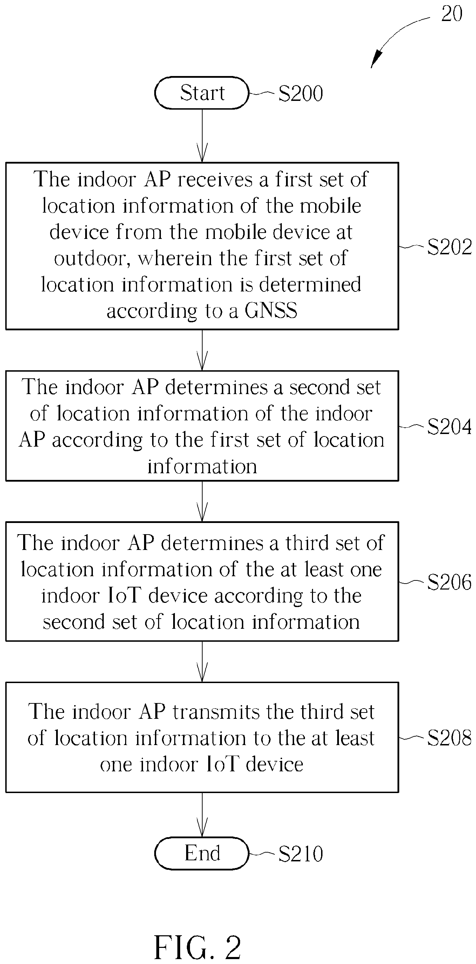

FIG. 2 is a flowchart of a process 20 utilized in a location tracking system (e.g., the location tracking system 100 shown in FIG. 1) according to an embodiment of the invention, to track a location. The location tracking system comprises a mobile device (e.g., the mobile device 110 shown in FIG. 1), an indoor AP (e.g., the indoor AP 120 shown in FIG. 1) and at least one indoor IoT device (e.g., the indoor IoT devices 130 shown in FIG. 1) . Provided that the result is substantially the same, the steps are not required to be executed in the exact order shown in FIG. 2. The process 20 comprises the following steps:
Step S200: Start.
Step S202: The indoor AP receives a first set of location information of the mobile device from the mobile device at outdoor, wherein the first set of location information is determined according to a Global Navigation Satellite System (GNSS).
Step S204: The indoor AP determines a second set of location information of the indoor AP according to the first set of location information.
Step S206: The indoor AP determines a third set of location information of the at least one indoor IoT device according to the second set of location information.
Step S208: The indoor AP transmits the third set of location information to the at least one indoor IoT device.
Step S210: End.

According to the process 20, the location tracking system 100 determines a second set of location information of the indoor AP 120 according to a first set of location information of the mobile device 110, and determines a third set of location of the at least one indoor IoT device 130 according to the second set of location information of the indoor AP 120. Therefore, the location information of the indoor AP 120 and the at least one indoor IoT device 130 are provided/updated automatically instead of being set manually.

Realization of the process 20 is not limited to the above description. The following embodiments/preferred features of the invention may be applied to realize the process 20.

Preferably, the first set of location information, the second set of location information and the third set of location information are related to (e.g., comprise) GNSS coordinates, angle of arrival (AoA) information and ranging information. Preferably, the AoA information comprises an AoA related to the mobile device 110 and the indoor AP 120 and/or an AoA(s) related to the indoor AP 120 and the at least one indoor IoT device 130. Preferably, the ranging information comprises a range between the mobile device 110 and the indoor AP 120 and/or a range(s) between the indoor AP 120 and the at least one indoor IoT device 130.

Preferably, the indoor AP 120 receives a request frame for requesting the ranging information (e.g., from the mobile device 110), and transmits the ranging information (e.g., to the mobile device 110) in response to the request frame. Preferably, the mobile device 110 obtains the AoA information according to at least one first measurement. Preferably, the indoor AP 120 obtains the at least one AoA information according to at least one second measurement. Preferably, the GNSS coordinates are World Geodetic System-1984 Coordinate System (WGS-84) coordinates.

Preferably, the mobile device 110 transits a first capability (e.g., a request capability) of the mobile device 110 to the indoor AP 120, to inform that the mobile device 110 supports a Fine Time Measurement (FTM) Responder and that a Vendor information element (IE) communicated by the mobile device 110 supports an auto locator function. Preferably, the indoor AP 120 transits a second capability to the mobile device 110 and the at least one indoor IoT device 130 (e.g., in a beacon frame), to inform that the indoor AP 120 supports an FTM Initiator and that a Vendor IE communicated by the indoor AP 120 supports the auto locator function. Preferably, the at least one indoor IoT device 130 transits a third capability (e.g., a request capability) of the at least one indoor IoT device 130 to the indoor AP 120, to inform that the at least one indoor IoT device 130 supports the FTM Responder and that a Vendor IE communicated by the at least one indoor IoT device 130 supports the auto locator function.

Preferably, the second set of location information is determined according to the first set of location information periodically, to update the second set of location information. Preferably, the second set of location information is determined according to the first set of location information, when an event occurs (e.g., the mobile device 110 enters indoors) . Preferably, the third set of location information is determined according to the second set of location information periodically, to update the third set of location information.

Preferably, the first set of location information is received in a first frame (e.g., a local measurement report (LMR) frame). Preferably, the first frame comprises a first auto locator field (e.g., a first auto locator IE). The first auto locator field comprises the first set of location information. Preferably, the first frame comprises a time of delivery (ToD) field and a time of arrival (ToA) field. The ToD field and the ToA field are used for the indoor AP 120 to obtain the ranging information.

Preferably, the third set of location information is transmitted in a second frame (e.g., an FTM frame). Preferably, the second frame comprises a second auto locator field (e.g., a second auto locator IE). The second auto locator field comprises the third set of location information. Preferably, the request frame has an auto locator frame format.

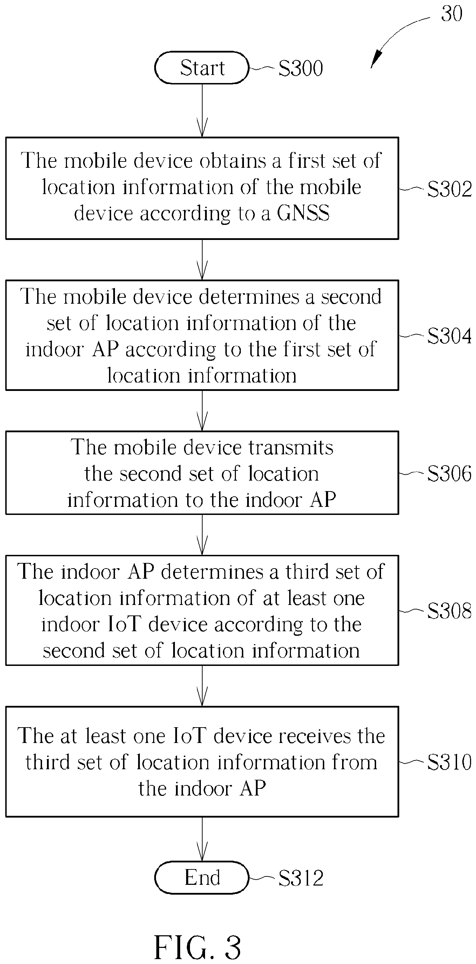

FIG. 3 is a flowchart of a process 30 utilized in a location tracking system (e.g., the location tracking system 100 shown in FIG. 1) according to an embodiment of the invention, to track a location. The location tracking system comprises a mobile device (e.g., the mobile device 110 shown in FIG. 1), an indoor AP (e.g., the indoor AP 120 shown in FIG. 1) and at least one indoor IoT device (e.g., the indoor IoT devices 130 shown in FIG. 1) . Provided that the result is substantially the same, the steps are not required to be executed in the exact order shown in FIG. 3. The process 30 comprises the following steps:
Step S300: Start.
Step S302: The mobile device obtains a first set of location information of the mobile device according to a Global Navigation Satellite System (GNSS).
Step S304: The mobile device determines a second set of location information of the indoor AP according to the first set of location information.
Step S306: The mobile device transmits the second set of location information to the indoor AP.
Step S308: The indoor AP determines a third set of location information of at least one indoor IoT device according to the second set of location information.
Step S310: The at least one indoor IoT device receives the third set of location information from the indoor AP.
Step S312:End.

According to the process 30, the location tracking system 100 determines a second set of location information of the indoor AP 120 according to a first set of location information of the mobile device 110, and determines a third set of location information of the at least one indoor IoT device 130 according to the second set of location information of the indoor AP 120. Therefore, the location information of the indoor AP 120 and the at least one indoor IoT device 130 are provided/updated automatically instead of being set manually.

Realization of the process 30 is not limited to the above description. The following embodiments/preferred features of the invention may be applied to realize the process 30.

Preferably, the mobile device 110 obtains first location information of the mobile device 110 according to the GNSS, when the mobile device 110 enters indoors (e.g., home, office or mall).

Preferably, the first set of location information comprises a first GNSS coordinate of the mobile device 110, an AoA information and ranging information. The AoA information comprises an AoA related to the mobile device 110 and the indoor AP 120, and the ranging information comprises a range between the mobile device 110 and the indoor AP 120. Preferably, the mobile device 110 transmits a first request frame for requesting the ranging information to the indoor AP 120. The indoor AP 120 determines the ranging information in response to the first request frame. Then, the mobile device 110 receives the ranging information from the indoor AP 120. Preferably, the mobile device 110 obtains the AoA information according to at least one first measurement.

Preferably, the second set of location information comprises a second GNSS coordinate of the indoor AP, at least one AoA information and at least one ranging information. The at least one AoA information comprises at least one AoA related to the indoor AP 120 and the at least one indoor IoT device 130, and the at least one ranging information comprises at least one range between the indoor AP 120 and the at least one indoor IoT device 130. Preferably, the indoor AP 120 transmits a second request frame for requesting the at least one ranging information to the at least one indoor IoT device 130. The at least one indoor IoT device 130 determines the at least one ranging information in response to the second request frame. Then, the indoor AP 120 receives the at least one ranging information from the at least one indoor IoT device 130. Preferably, the indoor AP 120 obtains the at least one AoA information according to at least one second measurement.

Preferably, the GNSS comprises (e.g., is) a Global Positioning System (GPS), a Globalnaya Navigatsionnaya Sputnikovaya Sistema (GLONASS), a BeiDou Navigation Satellite System (BDS) or a Galileo Navigation Satellite System, but is not limited herein. Preferably, the first GNSS coordinate and the second GNSS coordinate are WGS-84 coordinates.

Preferably, the mobile device 110 transmits a first capability (e.g., a request capability) of the mobile device 110 to the indoor AP 120, to inform that the mobile device 110 supports an FTM Responder and that a Vendor IE communicated (e.g., transmitted and/or received) by the mobile device 110 supports an auto locator function. Preferably, the indoor AP 120 transmits a second capability to the mobile device 110 and the at least one indoor IoT device 130 (e.g., in a beacon frame), to inform that the indoor AP 120 supports an FTM Initiator and that a Vendor IE communicated by the indoor AP 120 supports an auto locator function. Preferably, the at least one indoor IoT device 130 transmits a third capability (e.g., a request capability) of the at least one indoor IoT device 130 to the indoor AP 120, to inform that the at least one indoor IoT device 130 supports an FTM Responder and that a Vendor IE communicated by the at least one indoor IoT device 130 supports an auto locator function.

Preferably, the mobile device 110 determines the second set of location information according to the first set of location information periodically, to update the second set of location information. Preferably, the mobile device 110 determines or updates the second set of location information according to the first set of location information, when the mobile device 110 enters indoors. Preferably, the indoor AP 120 receives the updated second set of location information from the mobile device 110, after the mobile device 110 updates the second set of location information. That is, the second set of location information is updated periodically, or is updated when an event occurs. Preferably, the indoor AP 120 determines the third set of location information according to the second set of location information periodically, to update the third set of location information. Preferably, the at least one indoor IoT device 130 receives the updated third set of location information from the indoor AP 120, after the indoor AP 120 updates the third set of location information. That is, the third set of location information is updated periodically.

Preferably, the second set of location information is transmitted in a first frame (e.g., a local measurement report (LMR) frame). Preferably, the first frame comprises a first auto locator field (e.g., a first auto locator IE). The first auto locator field comprises the second set of location information. Preferably, the first frame comprises a time of delivery (ToD) field and a time of arrival (ToA) field. The ToD field and the ToA field are used for the mobile device 110 to obtain the ranging information.

Preferably, the third set of location information is transmitted in a second frame (e.g., an FTM frame). Preferably, the second frame comprises a second auto locator field (e.g., a second auto locator IE). The second auto locator field comprises the third set of location information. Preferably, the first request frame (e.g., an FTM request frame) and the second request frame (e.g., a radio measurement request frame) have an auto locator frame format.

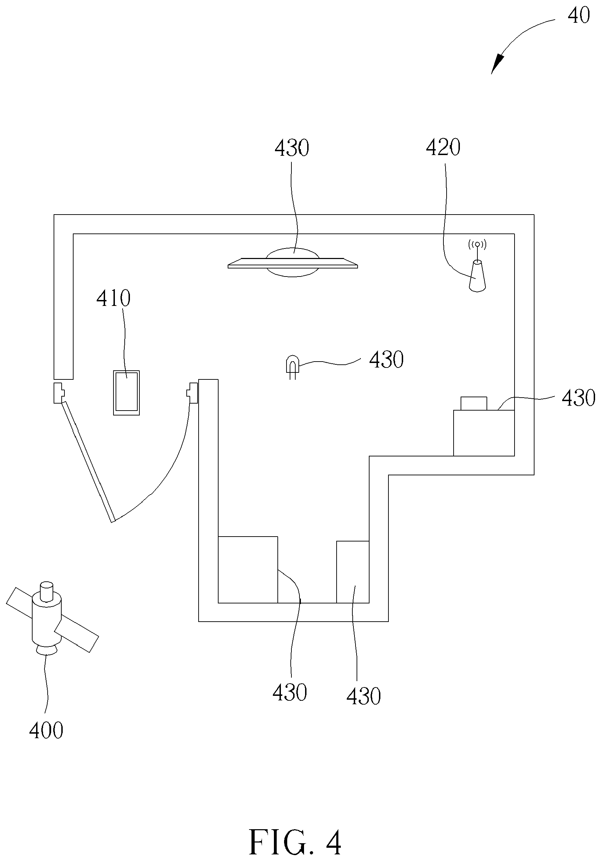

FIG. 4 is a schematic diagram of a scenario 40 according to an example of the present invention. There are a satellite 400, a mobile device 410, an AP 420 and a plurality of IoT devices 430 (e.g., a television, a light, a printer, a refrigerator and a safe). The AP 420 and the IoT devices 430 are indoor devices. First, the mobile device 410 obtains the coordinate information of the mobile device 410 from the satellite 400, before the mobile device 410 moves from outdoors to indoors. Then, the mobile device 410 transmits an FTM request frame to the AP 420. The AP 420 determines a range between the mobile device 410 and the AP 420 in response to the FTM request frame, and transmits the range to the mobile device 410. The mobile device 410 obtains an AoA related to the mobile device 410 and the AP 420 according to at least one measurement(s). Accordingly, the mobile device 410 determines the coordinate information of the AP 420 according to the coordinate information of the mobile device 410, the range and the AoA, and transmits the coordinate information of the AP 420 in a LMR frame to the AP 420.

Then, the AP 420 transmits a radio measurement request frame to the IoT devices 430. The IoT devices 430 determine ranges between the AP 420 and the IoT devices 430 in response to the radio measurement request frame, respectively, and transmit the ranges to the AP 420, respectively. The AP 420 obtains AoAs related to the AP 420 and the IoT devices 430 according to measurements. The AoAs correspond to the IoT devices 430, respectively. Accordingly, the AP 420 determines the coordinate information of the IoT devices 430 according to the coordinate information of the AP 420, the ranges and the AoAs, and transmits the coordinate information of the IoT devices 430 in an FTM frame to the IoT devices 430.

In FIG. 4, the AP 420 checks if there is an update of the first set of location information of the mobile device periodically to determine whether the second set of location information of indoor AP 420 needs to be updated. In other words, if the AP 420 finds out the received first set of location information is updated from the previous one, the AP 420 will update its second set of location information accordingly. As a result, the AP 420 would update the third set of location information of the IoT devices 430 according to the updated second set of location information when the periodical check finds an update is necessary. That is, the location information of the AP 420 and the IoT devices 430 may be updated automatically.

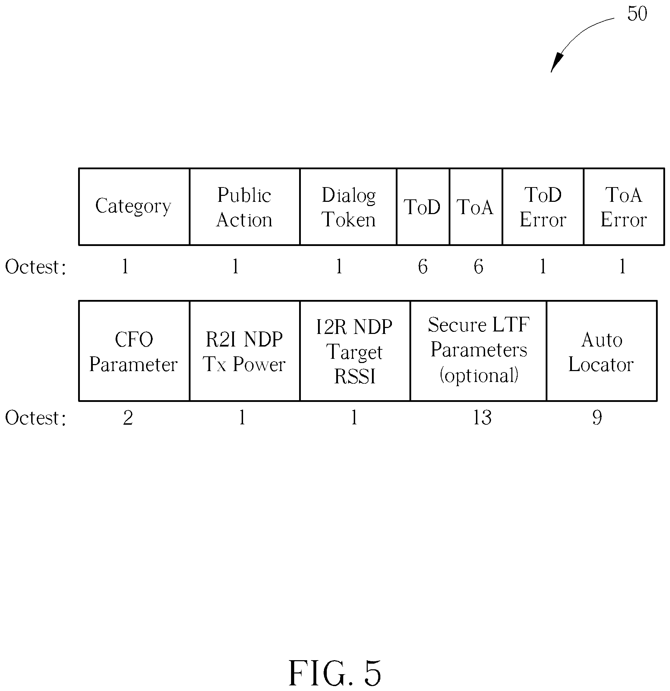

FIG. 5 is a schematic diagram of a frame 50 according to an example of the present invention. The frame 50 may be the first frame in the previous embodiments/preferred features of the processes 20-30, but is not limited herein. The frame 50 comprises a Category field with 1 byte, a Public Action field with 1 byte, a Dialog Token field with 1 byte, a ToD field with 6 bytes, a ToA field with 6 bytes, a ToD Error field with 1 byte, a ToA Error field with 1 byte, a Carrier Frequency Offset (CFO) Parameter field with 2 bytes, a Responder-to-Initiator (R2I) Null Data Packet (NDP) Transmit (Tx) Power field with 1 byte, a Initiator-to-Responder (I2R) NDP Target Received Signal Strength Indication (RSSI) field with 1 byte, a Secure Long Training Field (LTF) Parameters field (optional) with 13 bytes and an Auto Locator field with 9 bytes. The first set of location information of the mobile device 110 in the process 20 and the second location information of the indoor AP 120 in the process 30 may be comprised in the Auto Locator field of the frame 50.

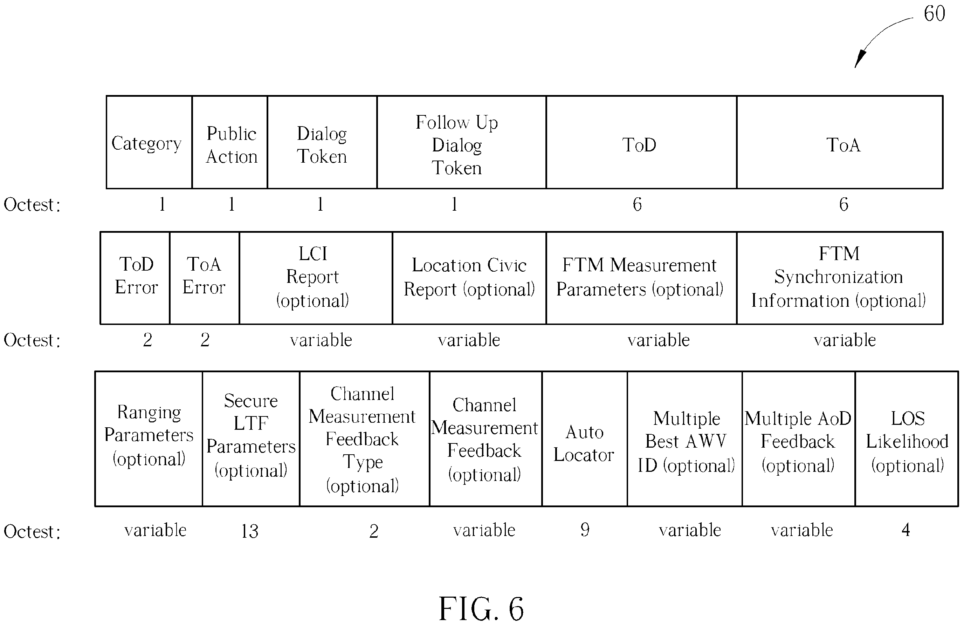

FIG. 6 is a schematic diagram of a frame 60 according to an example of the present invention. The frame 60 may be the second frame in the previous embodiments/preferred features of the processes 20-30, but is not limited herein. The frame 60 comprises a Category field with 1 byte, a Public Action field with 1 byte, a Dialog Token field with 1 byte, a Follow Up Dialog Token field with 1 byte, a ToD field with 6 bytes, a ToA field with 6 bytes, a ToD Error field with 2 byte, a ToA Error field with 2 byte, a Location Configuration Information (LCI) Report field (optional) with variable bytes, a Location Civic Report field (optional) with variable bytes, an FTM Measurement Parameters field (optional) with variable bytes, an FTM Synchronization Information field (optional) with variable bytes, a Ranging Parameters field (optional) with variable bytes, a Secure LTF Parameters field (optional) with 13 bytes, a Channel Measurement Feedback Type field (optional) with 2 bytes, a Channel Measurement Feedback field (optional) with variable bytes, an Auto Locator field with 9 bytes, a Multiple Best Antenna Weight Vector (AWV) Identity (ID) field (optional) with variable bytes, a Multiple Angle of Departure (AoD) Feedback field (optional) with variable bytes and a Line of Sight (LOS) Likelihood field (optional) with 4 bytes. The third set of location information of the at least one indoor IoT device 130 in the processes 20-30 may be comprised in the Auto Locator field of the frame 60.

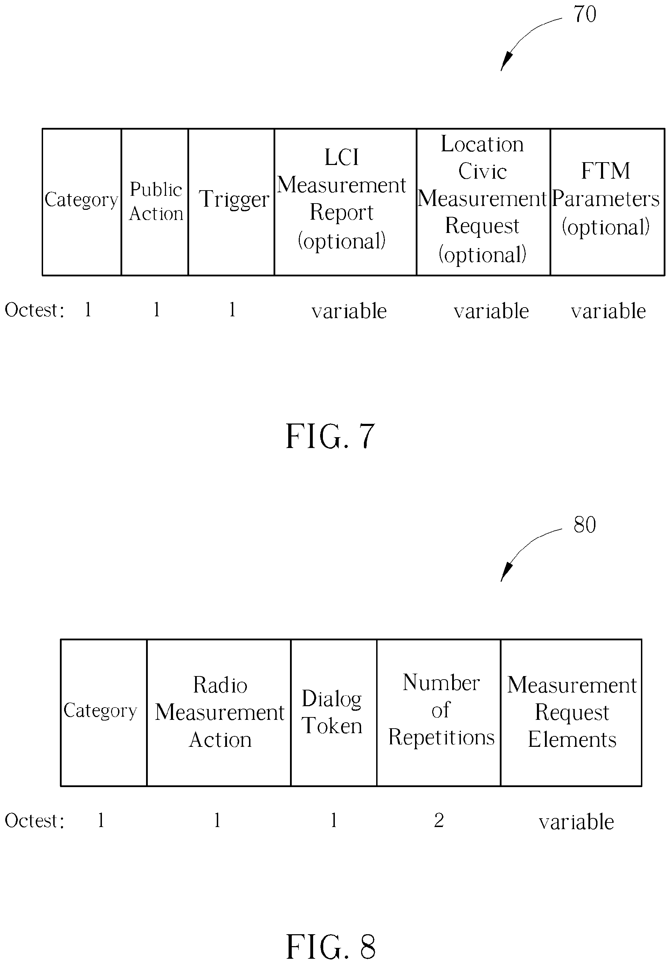

FIG. 7 is a schematic diagram of a request frame 70 according to an example of the present invention. The request frame 70 may be the request frame in the previous embodiments/preferred features of the process 20 or the first request frame in the previous embodiments/preferred features of the process 30, but is not limited herein. The mobile device 110 may transmits the request frame 70 to the indoor AP 120, to request the ranging information. The request frame 70 comprises a Category field with 1 byte, a Public Action field with 1 byte, a Trigger field with 1 byte, a LCI Measurement Report field (optional) with variable bytes, a Location Civic Measurement Request field (optional) with variable bytes and an FTM Parameters field (optional) with variable bytes.

FIG. 8 is a schematic diagram of a request frame 80 according to an example of the present invention. The request frame 80 may be the request frame in the previous embodiments/preferred features of the process 20 or the second request frame in the previous embodiments/preferred features of the process 30, but is not limited herein. The indoor AP 120 may transmits the request frame 80 to the at least one indoor IoT device 130, to request the at least one ranging information. The request frame 80 comprises a Category field with 1 byte, a Radio Measurement Action field with 1 byte, a Dialog Token field with 1 byte, a Number of Repetitions with 2 bytes and a Measurement Request Elements field with variable bytes.

To sum up, the present invention provides a location tracking system and a corresponding method. The location tracking system comprises a mobile device, an indoor AP and an indoor IoT device(s). The location tracking system determines the location information of the indoor AP according to the location information of the mobile device, and determines the location information of the indoor IoT device(s) according to the location information of the indoor AP. In addition, the location information of the mobile device is checked periodically by the indoor AP, or is checked when an event occurs. When the location information of the mobile device is updated, in response, the indoor AP would update the second set of information accordingly. If the update occurs, the location information of the indoor IoT device(s) is determined again according to the updated location information of the indoor AP. Accordingly, the locations of the indoor AP and the indoor IoT device(s) are provide/updated automatically.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A method for a location tracking, applied to a mobile device, an indoor access point, in the following also referred to as AP, and at least one indoor Internet of Things, in the following also referred to as IoT, device, the method comprising:
receiving, by the indoor AP, a first set of location information from the mobile device at outdoor, wherein the first set of location information is determined according to a Global Navigation Satellite System, in the following also referred to as GNSS, S202);
determining, by the indoor AP, a second set of location information of the indoor AP according to the first set of location information (S204);
determining, by the indoor AP, a third set of location information of the at least one indoor IoT device according to the second set of location information (S206); and
transmitting, by the indoor AP, the third set of location information to the at least one indoor IoT device (S208);
wherein the first set of location information, the second set of location information and the third set of location information are related to GNSS coordinates, angle of arrival, in the following also referred to as AoA, information and ranging information.

2. The method of claim 1, further comprising:
receiving, by the indoor AP, a request frame for requesting the ranging information; and
transmitting, by the indoor AP, the ranging information in response to the request frame.

3. The method of claim 1 or 2, wherein the AoA information is obtained according to at least one measurement.

4. The method of any one of claims 1 to 3, wherein the GNSS coordinates are World Geodetic System-1984 Coordinate System, in the following also referred to as WGS-84, coordinates.

5. The method of any one of claims 1 to 4, further comprising:
receiving, by the indoor AP, a first capability of the mobile device from the mobile device, to inform that the mobile device supports a Fine Time Measurement, in the following also referred to as FTM, Responder and that a Vendor information element, in the following also referred to as IE, communicated by the mobile device supports an auto locator function.

6. The method of any one of claims 1 to 5, further comprising:
transmitting, by the indoor AP, a second capability to the mobile device and the at least one indoor IoT device, to inform that the indoor AP supports an FTM Initiator and that a Vendor IE communicated by the indoor AP supports an auto locator function.

7. The method of any one of claims 1 to 6, further comprising:
receiving, by the indoor AP, a third capability of the at least one indoor IoT device, to inform that the at least one indoor IoT device supports an FTM Responder and that a Vendor IE communicated by the at least one indoor IoT device supports an auto locator function.

8. The method of any one of claims 1 to 7, further comprising:
checking, by the indoor AP, the received first set of location information periodically to determine whether the second set of location information needs to be updated.

9. A location tracking system (100), comprising a mobile device (110), an indoor access point (120), in the following also referred to as AP, and at least one indoor Internet of Things, in the following also referred to as IoT, device (130), wherein the location tracking system (100) is applicable to:
receive, by the indoor AP (120), a first set of location information from the mobile device (110) at outdoor, wherein the first set of location information is determined according to a Global Navigation Satellite System, in the following also referred to as GNSS;
determine, by the indoor AP (120), a second set of location information of the indoor AP (120) according to the first set of location information;
determine, by the indoor AP (120), a third set of location information of the at least one indoor IoT device (130) according to the second set of location information; and
transmit, by the indoor AP (120), the third set of location information to the at least one indoor IoT device (130);
wherein the first set of location information, the second set of location information and the third set of location information are related to GNSS coordinates, angle of arrival, in the following also referred to as AoA, information and ranging information.

10. The location tracking system (100) of claim 9, being further applicable to receive, by the indoor AP (120), a request frame for requesting the ranging information; and transmit, by the indoor AP (120), the ranging information to the mobile device (110), in response to the request frame.

11. The location tracking system (100) of claim 9 or 10, being further applicable to:
obtain, by the mobile device (110), the AoA information according to at least one first measurement.

12. The location tracking system (100) of any one of claims 9 to 11, being further applicable to:
obtain, by the indoor AP (120), at least one AoA information according to at least one second measurement.

13. The location tracking system (100) of any one of claims 9 to 12, being further applicable to:
receive, by the indoor AP (120), a first capability of the mobile device (110), to inform that the mobile device (110) supports a Fine Time Measurement, in the following also referred to as FTM, Responder and that a Vendor information element, in the following also referred to as IE, communicated by the mobile device (110) supports an auto locator function; and/or
transmit, by the indoor AP (120), a second capability to the mobile device (110) and the at least one indoor IoT device (130), to inform that the indoor AP (120) supports a FTM Initiator and that a Vendor IE communicated by the indoor AP (120) supports an auto locator function; and/or
receive, by the indoor AP (120), a third capability of the at least one indoor IoT device (130), to inform that the at least one indoor IoT device (130) supports a FTM Responder and that a Vendor IE communicated by the at least one indoor IoT device (130) supports an auto locator function.

14. The location tracking system of any one of claims 9 to 13, being further applicable to check, by the indoor AP (120), the received first set of location information periodically to determine whether the second set of location information needs to be updated.

15. The method of claim 8 or the location tracking system of claim 14, wherein the third set of location information is updated according to the updated second set of location information.
